# EUROPÄISCHE PATENTSCHRIFT

(11) **EP 0 664 427 B1**
(45) Veröffentlichungstag und Bekanntmachung des Hinweises auf die Patenterteilung: **18.03.1998**
(21) Anmeldenummer: 94119179.3
(22) Anmeldetag: 05.12.1994
(51) Int. Cl.: F27D 15/02, F23H 7/08, F16L 51/02

(54) **Schubrostkühler**
Grate cooler with sliding grates
Refroidisseur à grilles poussantes

(30) Priorität: 24.01.1994 DE 4401931; 20.06.1994 DE 4421552
(43) Veröffentlichungstag der Anmeldung: 26.07.1995
(73) Patentinhaber: KRUPP POLYSIUS AG, 59269 Beckum (DE)
(72) Erfinder: Tegtmeier, Gert Dipl.-Ing., D-59302 Oelde (DE); Strohbusch, Manfred, D-59320 Ennigerloh (DE); Henrich, Bernd Dipl.-Ing., D-59329 Ennigerloh (DE); Guerrero, Palma Pedro Dipl.-Ing., D-59510 Lippetal (DE); Halbleib, Andreas Dipl.-Ing., D-59269 Beckum (DE)
(74) Vertreter: Tetzner, Volkmar, Dr.-Ing. Dr. jur.

(56) Entgegenhaltungen:
- WO-A-94/12840
- DE-A- 2 927 639
- DE-U- 9 205 401
- US-A- 1 923 124
- US-A- 4 090 726
- US-A- 4 510 873
- US-A- 4 536 018
- US-A- 4 563 959

## Beschreibung

Die Erfindung betrifft einen Schubrostkühler für heißes Kühlgut, entsprechend dem Oberbegriff des Anspruches 1.

Aus der US-A-45 63 959 ist ein allgemein nach Art eines Schubrostes gestalteter Verbrennungsrost für kommunale Abfälle bekannt. Dieser somit nicht unter den Gattungsbegriff des Anspruches 1 der vorliegende Erfindung fallende Verbrennungsrost ist mit hin- und hergehenden Rostabschnitten ausgestattet, die Rostplatten aufweisen. Während bei einem Schubrostkühler der vorausgesetzten Art die Rostplatten durch darin eingearbeitete Kühlgas-Durchtrittsöffnungen von unten nach oben von einem Kühlgas durchströmt werden, wird zuzuführende Verbrennungsluft gemäß dieser US-A-45 63 959 durch Spalte von unten nach oben geleitet, die zwischen den Rostplatten und Rostrahmen vorgesehen sind; ferner wird ein Teil der Verbrennungsluft durch Spalte von Rostelementen zunächst nach unten abgelenkt und dann zwischen einander benachbarten festen und losen Rostabschnitten hindurch nach oben in das Abfallmaterial geleitet. Die sich in Rostlängsrichtung erstreckenden, hin- und herbewegbaren Rostabschnitte weisen längs verlaufende, nach oben offene, etwa kanalförmige Rahmenträger auf, die die Rostplatten tragen, eine Art Luftkanal bilden und mit hohlen, stationären Rostrahmen eine Leitungsverbindung aufweisen, indem sich an der Unterseite der Rahmenträger befestigte, hohle Gleitkästen über Gleitplatten auf Gleitschuhen des Rostrahmens gleitend abstützen und untere Durchgangsöffnungen dieser Gleitkästen über Längsöffnungen an der Oberseite des Rostrahmens mit dessen innerem Luftzuführraum in jeder Längsbewegungsphase der Rahmenträger in offener Leitungsverbindung stehen.

Schubrostkühler der im Oberbegriff des Anspruches 1 vorausgesetzten Art sind aus der Praxis hinreichend bekannt. Im allgemeinen wird durch sinnvoll zusammengeordnete feste sowie hin- und herbewegliche Rostplatten eine Rostfläche gebildet, auf der darauf abgeworfenes heißes Kühlgut verteilt und weitergefördert wird, wobei es mit Hilfe eines die Rostplatten von unten nach oben durchströmenden Kühlgases abgekühlt wird. Bei dem abzukühlenden Kühlgut kann es sich beispielsweise um aus einem Brennofen ausgetragenen heißen Zementklinker, um gebrannten Kalk, heißes Erzmaterial oder dgl. handeln.

Bei diesen als bekannt vorausgesetzten Schubrostkühlern wird den Rostplatten Kühlgas bzw. Kühlluft von unten her direkt zugeführt. Aus diesem Grunde sind die beweglichen Rostplatten über hohle Rostplattenträger auf einem in Längsrichtung des Kühlers hin- und herbeweglichen, in geeigneter Weise angetriebenen Schwingrahmen fest abgestützt, wobei die Rostplattenträger gleichzeitig Kühlgas-Zuführleitungen zu den beweglichen Rostplatten bilden. Hier ist es nun erforderlich, über ortsfeste Kühlgas-Zuführkanäle in den Unterteil des Kühlergehäuses herangeführtes Kühlgas in die hin- und herbewegten Kühlgas-Zuführleitungen weiterzuleiten. Zu diesem Zweck stehen die ortsfesten Kühlgas-Zuführkanäle über Kompensationseinrichtungen mit entsprechenden mitbewegten Kühlgas-Anschlußstutzen in Leitungsverbindung. Bei den aus der Praxis bekannten Schubrostkühlern können die Kompensationseinrichtungen zwischen den ortsfesten KühlgasKühlgas-Zuführkanälen und den hin- und herbewegten Kühlgas-Anschlußstutzen der Kühlgas-Zuführleitungen beispielsweise in Form von rohrförmigen Doppelgelenkverbindungen oder in Form von flexiblen Stahlwickelschläuchen ausgeführt sein.

Bei dem weiter oben erwähnten Kühlgut ist zu beachten, daß dieses verhältnismäßig abrasiv ist und daher an Gelenkteilen oder flexiblen Teilen, die diesem Kühlgut unmittelbar ausgesetzt sind, sehr starker Verschleiß auftritt, der zu regelmäßigen Ausfällen der genannten Bauteile führt und damit Stillstände der gesamten Produktionslinie, zu der dieser Schubrostkühler gehört, nach sich zieht.

Der Erfindung liegt daher die Aufgabe zugrunde, einen Schubrostkühler der im Oberbegriff des Anspruches 1 vorausgesetzten Art im Bereich der Kompensationseinrichtungen so auszubilden, daß bei relativ einfacher Konstruktion und zuverlässiger Kühlgasführung sowohl eine hinreichende Abdichtung zwischen den ortsfesten und bewegten Bauteilen als auch ein weitgehend verschleißfreies Zusammenwirken der relativ zueinander bewegbaren Bauteile gewährleistet ist.

Diese Aufgabe wird erfindungsgemäß durch die im Kennzeichen des Anspruches 1 angegebenen Merkmale gelöst.

Vorteilhafte Ausgestaltungen und Weiterbildungen der Erfindung sind Gegenstand der Unteransprüche.

Wesentliche Bauteile jeder Kompensationseinrichtung bei der erfindungsgemäßen Kühlerausführung sind zwei sich mit geringem Spaltabstand gegenüberliegende, parallel zueinander und parallel zur Bewegungsrichtung des Schwingrahmens verlaufende Abdichtungs-Rahmenplatten. Von diesen beiden zusammenwirkenden Rahmenplatten ist jeweils die eine, erste Abdichtungs-Rahmenplatte an dem zugehörigen Kühlgas-Anschlußstutzen sowie unmittelbar vor dessen Gaseinströmöffnung befestigt, während die zweite Abdichtungs-Rahmenplatte am gehäuseinneren Ende des zugehörigen ortsfesten Kühlgas-Zuführkanales sowie unmittelbar vor dessen Gasausströmöffnung befestigt ist. Bei jeder erfindungsgemäß ausgebildeten Kompensationseinrichtung liegen sich somit die beiden Abdichtungs-Rahmenplatten mit einem kleinstmöglichen Abstand vollständig berührungslos gegenüber, so daß sich die an dem Kühlgas-Anschlußstutzen, der gemeinsam mit dem Schwingrahmen hin- und herbeweglich ist, befestigte erste Abdichtungs-Rahmenplatte relativ zu der am KühlgasZuführkanal angebrachten zweiten Abdichtungs-Rahmenplatte frei bewegen kann, dabei aber eine verhältnismäßig weitreichende Abdichtung zwischen diesen beiden Abdichtungs-Rahmenplatten gewährleistet ist. Zu beachten ist hierbei, daß durch den Spaltabstand zwischen diesen beiden Abdichtungs-Rahmenplatten zwar ein relativ geringer Anteil des weiterzuleitenden Kühlgases aus dieser Leitungsverbindung bzw. Kompensationseinrichtung austreten kann. Dies bringt jedoch den Vorteil mit sich, daß das austretende Kühlgas den geringen Spaltabstand zwischen den beiden Abdichtungs-Rahmenplatten von möglichem Staub bzw. Staubablagerungen des Kühlgutes freihält, so daß die Abdichtungs-Rahmenplatten praktisch vollkommen verschleißfrei arbeiten können, da es im Normalbetrieb zu keiner Berührung der sich mit geringem Abstand gegenüberliegenden Dichtflächen kommt. Der durch den Spaltabstand entweichende, relativ geringe Kühlgasanteil tritt in den Raum unterhalb der Rostfläche aus und ergänzt darüber hinaus einen in diesen Raum im allgemeinen ohnehin eingeblasenen Sperrluftstrom, der seinerseits durch die zwischen den beweglichen und feststehenden Rostplatten vorhandenen Spalte über die Rostfläche verteilt nach oben durch die Kühlgutschicht entweicht.

Eine besonders zuverlässige und störungsfreie Kühlgasführung im Bereich jeder Kompensationseinrichtung läßt sich dadurch erreichen, daß die Rahmenöffnung der ersten Abdichtungs-Rahmenplatte dem Mündungsquerschnitt der Gaseintrittsöffnung des zugehörigen Kühlgas-Anschlußstutzens und die Rahmenöffnung der zweiten Abdichtungs-Rahmenplatte dem Mündungsquerschnitt der Gasauströmöffnung des zugehörigen Kühlgas-Zuführkanales angepaßt ist, wobei diese beiden sich gegenüberliegenden und zueinander ausgerichteten Querschnitte eine im wesentlichen gleich große Breite besitzen, der eine Querschnitt jedoch eine wenigstens um das Ausmaß der Hin- und Herbewegung (Hubbewegung) des Schwingrahmens vergrößerte Länge aufweist.

Die Zuverlässigkeit und Wirkung der durch die beiden sich berührungslos gegenüberliegenden Abdichtungs-Rahmenplatten jeder Kompensationseinrichtung kann auch dadurch verbessert bzw. im Bedarfsfalle jeweils neu eingestellt werden, daß gemäß einer sinnvollen Ausgestaltung der Erfindung von den beiden sich gegenüberliegenden Abdichtungs-Rahmenplatten wenigstens eine unter Einstellung eines definierten lichten Spaltabstandes relativ gegen die andere verstellbar ist.

Gemäß der vorliegenden Erfindung wird es im allgemeinen vorgezogen, daß der Schwingrahmen Hohlträger aufweist, auf denen die querverlaufenden Rostplattenträger der beweglichen Rostplatten befestigt sind und mit denen diese hohlen Rostplattenträger in Leitungsverbindung stehen, wobei der mitbewegliche bzw. die mitbeweglichen Kühlgas-Anschlußstutzen an diese Hohlträger angeschlossen ist bzw. sind. Hierdurch ergibt sich eine besonders einfache und günstige Ausbildung der Leitungsverbindung bzw. Gesamtleitung für die Kühlgaszuführung von dem wenigstens einen Kühlgas-Zuführungskanal zu den einzelnen beweglichen Rostplatten.

Demgegenüber kann es in manchen Fällen jedoch auch zweckmäßig sein, die mit dem Schwingrahmen mitbewegten Kühlgas-Anschlußstutzen unmittelbar an den hohlen Rostplattenträgern, und zwar vorzugsweise an deren Unterseite zu befestigen. Der Schwingrahmen kann in diesem Falle dann in Form eines einfachen Profilrahmens ausgeführt sein.

Die Erfindung sei nachfolgend anhand der Zeichnung näher erläutert. In dieser Zeichnung zeigen
- Fig.1: eine ganz schematisch gehaltene Teil-Längsschnittansicht (etwa entsprechend der Linie I-I in Fig.2) des erfindungsgemäßen Schubrostkühlers;
- Fig.2: eine Teilquerschnittsansicht etwa entlang der Linie II-II in Fig.1;
- Fig.3: eine vergrößerte Teil-Schnittansicht eines ersten Ausführungsbeispieles einer Kompensationseinrichtung, etwa entsprechend dem Ausschnitt III in Fig.1;
- Fig.4: eine ähnliche Teil-Schnittansicht wie Fig.3, jedoch von einem zweiten Ausführungsbeispiel der Kompensationseinrichtung;
- Fig.5: eine Teil-Querschnittsansicht entsprechend der Schnittlinie V-V in Fig.4;
- Fig.6: eine Teil-Aufsicht auf einen äußeren Abschnitt der zweiten Abdichtungs-Rahmenplatte (etwa entsprechend Linie VI-VI in Fig.4);
- Fig.7: eine zum Teil geschnittene, vergrößerte Teil-Seitenansicht (etwa entsprechend Ausschnitt III in Fig.1) einer weiteren Ausführungsform der Kompensationseinrichtung;
- Fig.8: eine ähnliche Vertikal-Schnittansicht wie Fig.3, zur Erläuterung eines weiteren Ausführungsbeispieles.

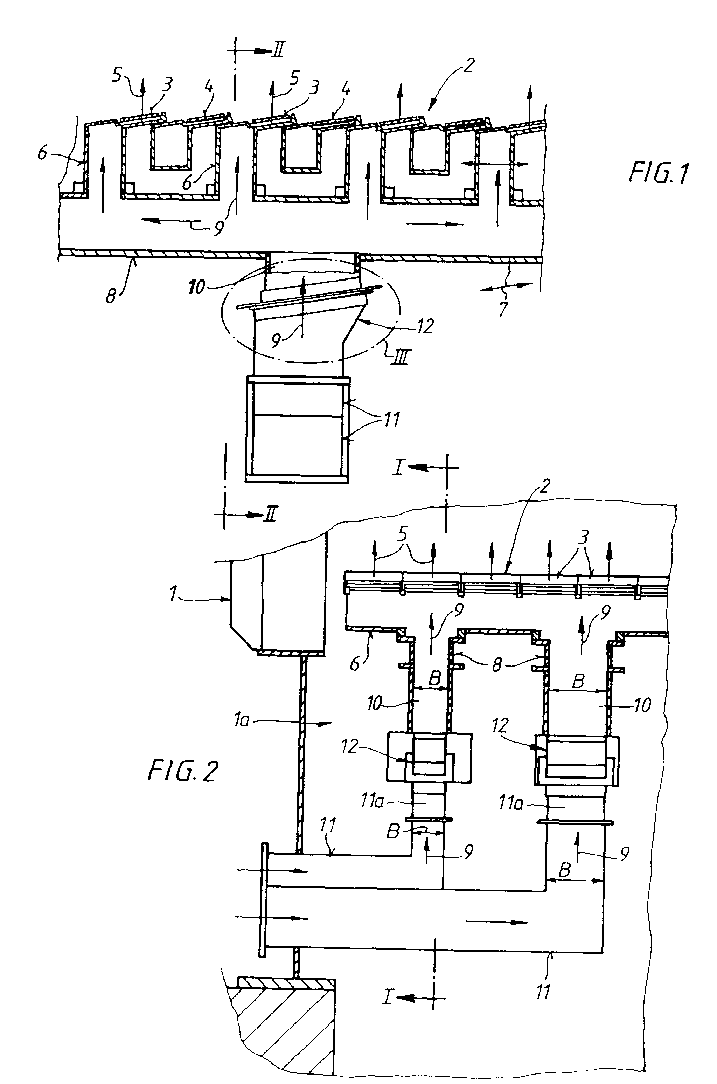

Der erfindungsgemäße Schubrostkühler ist in den Fig.1 und 2 nur in seinen im vorliegenden Zusammenhang vor allem interessierenden Teilbereichen ausschnittsweise veranschaulicht. Dieser Schubrostkühler enthält in an sich bekannter Weise ein ortsfestes, weitgehend geschlossenes Kühlergehäuse 1, in dem eine das Kühlgut aufnehmende und weiterfördernde Rost fläche 2 aus einer Vielzahl von festen und beweglichen Rostplatten angeordnet ist. Im vorliegenden Ausführungsbeispiel sei angenommen, daß die beweglichen Rostplatten 3 und die festen Rostplatten 4 sich in Längsrichtung der Rostfläche 2 einander abwechseln, wobei sowohl die beweglichen Rostplatten 3 als auch die festen Rostplatten 4 - wie Fig.2 erkennen läßt - jeweils in Querreihen aus beweglichen bzw. festen Rostplatten zusammengeordnet sind. Alle Rostplatten 3, 4 sind ferner in üblicher und daher nicht näher veranschaulichter Weise mit Kühlgas-Durchtrittsöffnungen versehen, so daß diese Rostplatten von einem geeigneten Kühlgas, insbesondere Kühlluft, von unten nach oben durchströmt werden können, wie es durch Pfeile 5 angedeutet ist.

Die beweglichen Rostplatten 3 sind in ebenfalls an sich bekannter Weise auf hohlen, etwa balkenartigen Rostplattenträgern 6 fest, jedoch auswechselbar angebracht. Die Rostplattenträger 6 ihrerseits sind in diesem Ausführungsbeispiel auf in Längsrichtung (Doppelpfeil 7) des Kühlers hin- und herbeweglichen Hohlträgern 8 eines in geeigneter Weise hin- und herbewegbar angetriebenen Schwingrahmens fest angeordnet. Die Rostplattenträger 6 und die Hohlträger 8 des Schwingrahmens stellen hierbei nicht nur eine reine Trag- und Antriebskonstruktion dar, sondern sie bilden auch gleichzeitig in ihrem Innern Kühlgas-Zuführleitungen zum Zuführen von durch Pfeile 9 angedeutetem Kühlgas (Kühlluft) zu den beweglichen Rostplatten 3. Ferner sind in diesem Falle an der Unterseite der Hohlträger 8 und daher mit diesen mitbewegte Kühlgas-Anschlußstutzen 10 fest angebracht.

In den unterhalb der Rostfläche 2 befindlichen Unterteil la des Kühlergehäuses 1 ragen ortsfeste Kühlgas-Zuführkanäle 11 hinein, die mit irgendeiner geeigneten äußeren Kühlgasquelle, z. B. wenigstens einem Kühlluftgebläse, in Verbindung stehen und dieses Kühlgas (Pfeile 9) den genannten Zuführleitungen zuführen sollen. Um die hin- und hergehenden Bewegungen der oberen Kühlgas-Zuführleitungen (Rostplattenträger 6 und Hohlträger 8) gegenüber den zugehörigen ortsfesten Kühlgas-Zuführkanälen 11 ausgleichen zu können, stehen diese Kühlgas-Zuführkanäle 11 durch Kompensationseinrichtungen 12 mit den mitbewegten Kühlgas-Anschlußstutzen 10 in Leitungsverbindung.

Alle Kompensationseinrichtungen 12 können im Prinzip gleichartig ausgeführt sein (abgesehen von einigen evtl. Anpassungsmaßnahmen an den lichten Querschnitt der zugehörigen Kühlgas-Zuführkanäle 11).

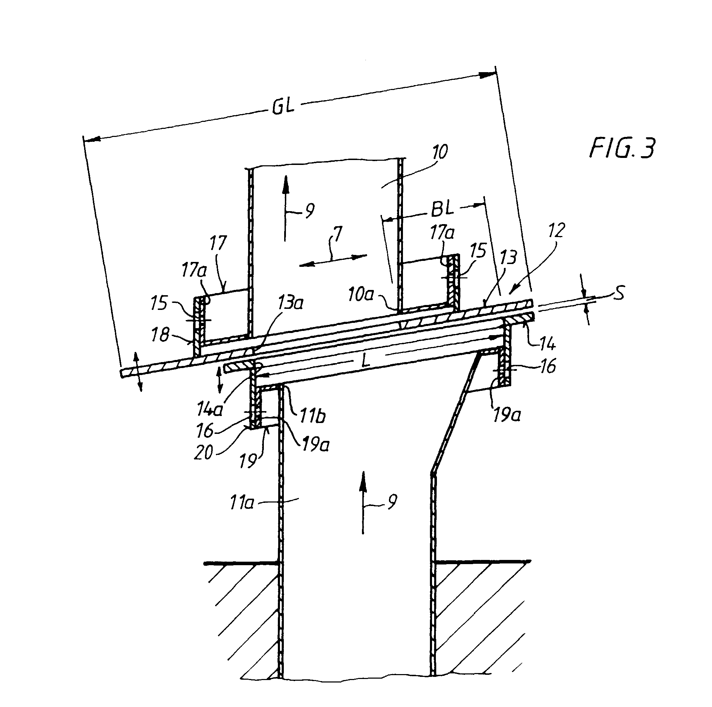

Ein erstes Ausführungsbeispiel einer solchen Kompensationseinrichtung 12 sei anhand Fig.3 näher erläutert.

Bei der Ausführung gemäß Fig.3 enthält jede Kompensationseinrichtung 12 zwei sich mit geringem Spaltabstand s gegenüberliegende, parallel zueinander und parallel zur Bewegungsrichtung (Pfeil 7) der Hohlträger 8 (und damit auch der zugehörigen KühlgasKühlgas-Abschlußstutzen 10) verlaufende Abdichtungs-Rahmenplatten, nämlich die - in Fig.3 - obere erste Abdichtungs-Rahmenplatte 13 und die untere zweite Abdichtungs-Rahmenplatte 14. Von diesen beiden im Sinne einer Leitungsabdichtung zusammenwirkenden beiden Abdichtungs-Rahmenplatten (Rahmenplattenpaar) ist die obere erste Abdichtungs-Rahmenplatte 13 am zugehörigen, hin- und herbeweglichen Kühlgasanschlußstutzen 10 sowie unmittelbar vor dessen Gaseinströmöffnung 10a und die untere zweite Abdichtungs-Rahmenplatte 14 am gehäuseinneren Ende 11a des zugehörigen, ortsfesten Kühlgas-Zuführkanales 11 sowie unmittelbar vor dessen Gasausströmöffnung 11b befestigt.

Die Rahmenöffnung 13a der ersten Abdichtungs-Rahmenplatte 13 ist hierbei dem Mündungsquerschnitt der Gasausströmöffnung 10a des Kühlgas-Anschlußstutzens 10, und die Rahmenöffnung 14a der zweiten Abdichtungs-Rahmenplatte 14 ist dem Mündungsquerschnitt der Gasausströmöffnung 11b des gehäuseinneren Endes des KühlgasZuführkanales 11 angepaßt. Diese beiden sich gegenüberliegenden und zueinander ausgerichteten Mündungsquerschnitte besitzen jeweils etwa die gleich große Breite B, wobei jedoch der eine Querschnitt - im vorliegenden Ausführungsbeispiel vorzugsweise der Mündungsquerschnitt des feststehenden gehäuseinneren Endes 11a des Kühlgas-Zuführkanales 11 - eine wenigstens um das Ausmaß BL der Hin- und Herbewegung (Doppelpfeil 7) der Schwingrahmen-Hohlträger 8 vergrößerte Länge L aufweist. Gemäß dem hier veranschaulichten Ausführungsbeispiel wird es vorgezogen, daß der Mündungsquerschnitt der Gasausströmöffnung 11b am gehäuseinneren Ende 11a des feststehenden Kühlgas-Zuführkanales 11 und dementsprechend die lichte Rahmenöffnung 14a der zugehörigen zweiten Abdichtungs-Rahmenplatte 14 wenigstens um das Ausmaß BL der Hin- und Herbewegung der Schwingrahmen-Hohlträger 8 verlängert ist. Demgegenüber weist die mit dem Hohlträger 8 bewegliche erste Abdichtungs-Rahmenplatte 13 eine wenigstens um das Ausmaß BL der Hin- und Herbewegung vergrößerte Gesamtlänge GL derart auf, daß die zweite Abdichtungs-Rahmenplatte 14 durch die mit ihr zusammenwirkende erste Abdichtungs-Rahmenplatte 13 während der ganzen Hin- und Herbewegung (Pfeil 7) des Hohlträgers 8 stets vollkommen abgedichtet bleibt.

Wie hierzu ferner in Fig.3 (und z. T. auch in Fig.1) zu erkennen ist, erweitert sich der lichte Mündungsquerschnitt des gehäuseinneren Endes 11a des zugehörigen Kühlgas-Zuführkanales 11 in Richtung auf den gegenüberliegenden Kühlgas-Anschlußstutzen 10 und gegenüber dem lichten Mündungsquerschnitt von dessen Gaseinströmöffnung 10a trichterförmig bis etwa auf die vergrößerte Länge L. Es ist somit in jeder Phase der Hin- und Herbewegung ein gleich großer Ubertrittsquerschnitt vom feststehenden Zuführkanalende 11a zum hin- und herbeweglichen Kühlgas-Anschlußstutzen 10 sichergestellt.

Bei jeder Kompensationseinrichtung 12 ist es ferner im Sinne einer definierten Einstellbarkeit des lichten Spaltabstandes s zweckmäßig, wenn von den beiden zusammenwirkenden und sich gegenüberliegenden Abdichtungs-Rahmenplatten 13, 14 der Kompensationseinrichtung 12 wenigstens eine relativ gegen die andere verstellt werden kann; vorzugsweise sind jedoch beide Abdichtungs-Rahmenplatten 13, 14 relativ gegeneinander verstellbar. Diese Verstellbarkeit kann durch jede geeignete Einrichtung geschaffen werden. Im Ausführungsbeispiel gemäß Fig.3 wird vorgeschlagen, daß die erste Abdichtungs-Rahmenplatte 13 durch mehrere erste Langloch-Schraubverbindungen - bei 15 nur schematisch angedeutet - verstellbar am zugehörigen Kühlgas-Anschlußstutzen 10 und die zweite Abdichtungs-Rahmenplatte 14 durch zweite Langloch-Schraubverbindungen - bei 16 schematisch angedeutet - am gehäuseinneren Ende 11a des zugehörigen Kühlgas-Zuführkanales 11 verstellbar befestigt ist.

Wie in den Fig.1, 2 und 3 zu erkennen ist, verbindet jede Kompensationseinrichtung 12 einen etwa vertikal ausgerichteten Kühlgas-Anschlußstutzen 10 mit einem im wesentlichen ebenfalls vertikal ausgerichteten gehäuseinneren Ende 11a des zugehörigen Kühlgas-Zuführkanales 11. Um den Kühlgas-Anschlußstutzen 10 ist nun ein umlaufender erster Halterungskragen 17 mit vertikal ausgerichteten Wänden 17a befestigt, an deren Außenseite ein parallel dazu verlaufender, etwa rohrförmiger erster Halterungsteil 18 der ersten Abdichtungs-Rahmenplatte 13 abgedichtet und teleskopartig verschiebbar über die ersten Langloch-Schraubverbindungen 15 gehaltert ist. In ähnlicher Weise ist um das gehäuseinnere Ende 11a des entsprechenden Kühlluft-Zuführkanales 11 ein zweiter Halterungskragen 19 mit vertikal ausgerichteten Wänden 19a befestigt, an deren Außenseiten ein parallel dazu verlaufender, rohrartiger zweiter Halterungsteil 20 der zweiten Abdichtungs-Rahmenplatte 14 teleskopartig verschiebbar und abgedichtet mittels der zweiten Langlochverbindungen 16 gehaltert ist.

Durch die zuletzt beschriebenen Maßnahmen kann somit bei jeder Kompensationseinrichtung 12 sowohl die am beweglichen Kühlrohr-Anschlußstutzen 10 angeordnete erste Abdichtungs-Rahmenplatte 13 als auch die am ortsfesten Zuführkanal-Ende 11a angeordnete zweite Abdichtungs-Rahmenplatte äußerst exakt und zuverlässig relativ zur jeweils gegenüberliegenden Abdichtungs-Rahmenplatte eingestellt und ausgerichtet werden, um auf diese Weise einen definierten Spaltabstand zwischen diesen beiden Rahmenplatten 13 und 14 herzustellen, wobei dieser Spaltabstand s beispielsweise 1 bis 2 mm betragen kann.

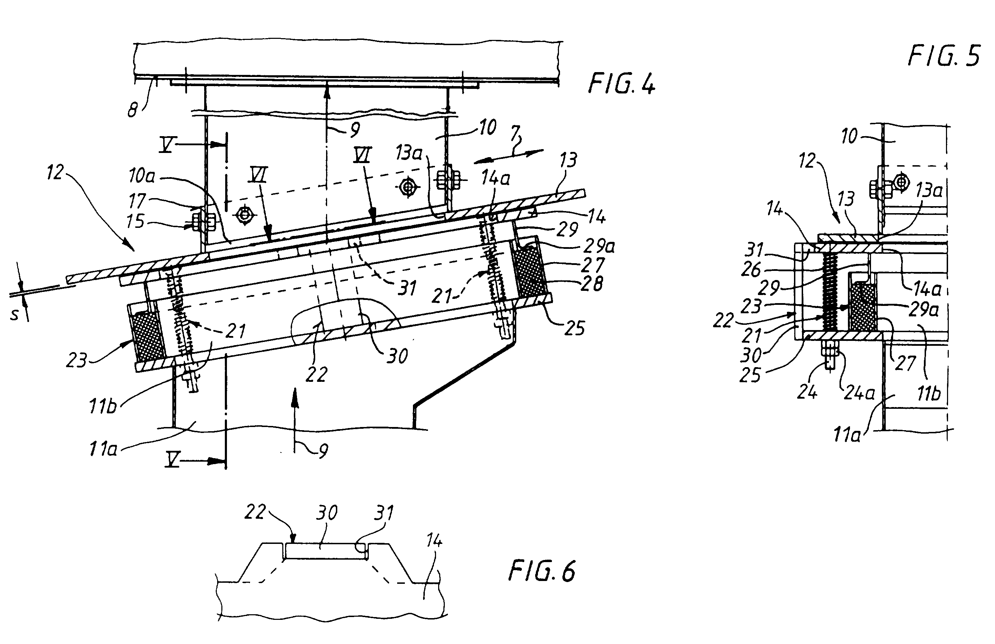

Ein zweites Ausführungsbeispiel für die Ausbildung der Kompensationseinrichtungen 12 sei nun anhand der Fig.4 bis 6 erläutert. Hierin sind alle gleichartig wie im Beispiel der Fig.3 ausgeführten Teile der Kompensationseinrichtung 12 mit denselben Bezugszeichen versehen, so daß auf deren Konstruktion und Gestaltung nicht nochmals detailliert eingegangen werden muß, zumal jede Kompensationseinrichtung 12 dieser zweiten Ausführungsform gleichartig bzw. an der gleichen Stelle angeordnet werden kann, wie es anhand der Fig.1 und 2 veranschaulicht und beschrieben ist.

Somit ist auch bei diesem zweiten Ausführungsbeispiel (Fig.4 bis 6) jede Kompensationseinrichtung 12 zwischen einem zusammen mit dem Hohlträger 8 in Richtung des Doppelpfeiles 7 hin- und herbeweglichen Kühlgas-Anschlußstutzen 10 und dem gehäuseinneren Ende 11a eines ortsfesten (feststehenden) Kühlgas-Zuführkanales angeordnet.

Gleichartig wie beim ersten Ausführungsbeispiel gemäß Fig.3 enthält auch dieses zweite Ausführungsbeispiel der Kompensationseinrichtung 12 zwei sich mit geringem Spaltabstand s gegenüberliegende, parallel zueinander und parallel zur Bewegungsrichtung (Pfeil 7) des Kühlgas-Anschlußstutzens 10 verlaufende Abdichtungs-Rahmenplatten, von denen die obere, erste Rahmenplatte 13 wiederum am Kühlgas-Anschlußstutzen 10 sowie unmittelbar vor dessen Gaseinströmöffnung 10a und die untere zweite Abdichtungs-Rahmenplatte 14 am gehäuseinneren Zuführkanalende 11a sowie unmittelbar vor dessen Gasauströmöffnung 11b befestigt ist. Was die Abmessungen und die Rahmenöffnungen 13a bzw. 14a sowie die übrigen Abmessungen dieser Abdichtungs-Rahmenplatte 13 und 14 anbelangt, so sind diese identisch mit den entsprechenden Ausführungen des anhand Fig.3 detailliert beschriebenen ersten Ausführungsbeispieles.

Auch in diesem zweiten Ausführungsbeispiel (Fig. 4 bis 6) ist vorgesehen, daß beide Abdichtungs-Rahmenplatten relativ gegeneinander verstellbar sind. Dazu kann die obere erste Abdichtungs-Rahmenplatte 13 ähnlich wie beim ersten Ausführungsbeispiel gemäß Fig.3 etwa mit Hilfe eines Halterungskragens 17 teleskopartig auf dem Kühlgas-Anschlußstutzen 10 verschiebbar und mittels Langloch-Schraubverbindungen 15 feststellbar gehaltert sein.

Abweichend vom ersten Ausführungsbeispiel ist die untere zweite Abdichtungs-Rahmenplatte 14 gemäß Fig.4 bis 6 durch mehrere einzeln justierbare Stellschrauben-Druckfeder-Anordnungen 21, die über den Umfang der Rahmenplatte 14 verteilt sind, am gehäuseinneren, ortsfesten Zuführkanalende 11a verstellbar und gegenüber diesem Zuführkanalende 11a nachgiebig gehaltert. Darüber hinaus sind zwischen dieser zweiten Abdichtungs-Rahmenplatte 14 und diesem Zuführkanalende 11a zum einen eine Positions-Führungseinrichtung 22 und zum andern eine flexible Dichtungseinrichtung 23 zugeordnet.

Wie in den Fig.4 und 5 zu erkennen ist, weist jede Stellschrauben-Druckfeder-Anordnung 21 eine Stellschraube 24 mit Stellmuttern 24a auf. Diese Stellschrauben 24 greifen mit ihrem oberen Ende an der zweiten Abdichtungs-Rahmenplatte 14 an und reichen mit ihrem unteren Ende durch einen Flansch 25 hindurch, der auf der Außenseite des gehäuseinneren Zuführkanalendes 11a befestigt ist. Zwischen diesem - zusammen mit dem Zuführkanalende 11a - feststehenden Flansch 25 und der zweiten Abdichtungs-Rahmenplatte 14 ist auf der Stellschraube 24 jeder Stellschrauben-Druckfeder-Anordnung 21 eine Druckfeder 26 eingespannt. Somit kann die untere zweite Abdichtungs-Rahmenplatte 14 durch ein entsprechendes Drehen der Stellmuttern 24a äußerst feinfühlig relativ gegenüber der oberen Rahmenplatte 13 eingestellt werden, wobei die untere Rahmenplatte 14 jedoch im Bedarfsfalle nach unten relativ zum feststehenden Zuführkanalende 11a federnd (nachgiebig) nach unten gedrückt werden kann. Diese Nachgiebigkeit der unteren zweiten Abichtungs-Rahmenplatte kann dann von Vorteil sein, wenn der bewegliche Rostteil aus irgendwelchen betrieblichen Gründen sich einmal etwas absenken sollte, wodurch die obere erste Abdichtungs-Rahmenplatte 13 dann mit der unteren Rahmenplatte 14 in Berührung kommen kann, d.h. bei einem solchen Absenken des beweglichen Rostteiles kann die untere Abdichtungs-Rahmenplatte 14 entsprechend nach unten ausweichen, so daß dann aufgrund der definierten und justierbaren Federspannung eine nur geringe Reibkraft zwischen den beiden Rahmenplatten 13 und 14 auftreten kann, die aber dann durch eine Neujustierung bzw. Neueinstellung der unteren zweiten Rahmenplatte 14 wieder aufgehoben werden kann.

Um bei dieser federnden bzw. nach unten nachgiebigen Halterung der unteren zweiten Abdichtungs-Rahmenplatte 14 an dem gehäuseinneren Zuführkanalende 11a auch zwischen dieser Rahmenplatte 14 und dem Flansch 25 kein Kühlgas nach außen austreten zu lassen, ist die flexible Dichtungseinrichtung 23 vorgesehen. Gemäß den Fig.4 und 5 kann diese flexible Dichtungseinrichtung 23 einen die Gasauströmöffnung 11b des Zufuhrkanalendes 11a umgebenden Führungskanal 27 mit einer darin eingelegten elastischen Dichtung 28 sowie einen an der Unterseite der zweiten Abdichtungs-Rahmenplatte 14 befestigten, um deren Rahmenöffnung 14a umlaufenden Dichtungsrahmen 29 aufweisen. Dieser Dichtungsrahmen 29 kann beispielsweise - wie in den Fig.4 und 5 gezeigt - in Form eines Winkelprofilrahmens ausgeführt sein, dessen unterer Winkelschenkel 29a in den nach oben offenen Führungskanal 27 eingreift und dabei federnd gegen die darin befindliche elastische Dichtung 28 gedrückt ist. Bei dieser elastischen Dichtung kann es sich um ein geeignetes, temperaturbeständiges Material handeln, beispielsweise um an sich bekannte Dichtungsschnüre oder Dichtungsstreifen aus Glasfaser- oder Keramikgewebe oder um Silikonmasse. Diese flexible Dichtungseinrichtung 23 gestattet bei dem oben erwähnten betriebsbedingten Absenken des beweglichen Rostteiles ein entsprechendes flexibles Absenken der zweiten Abdichtungs-Rahmenplatte 14, ohne daß dadurch von unten herangeführtes Kühlgas in diesen Bereichen nach außen austreten kann.

Die Fig.4 bis 6 zeigen außerdem eine Ausführungsmöglichkeit, wie bei einem betriebsbedingten Absenken des beweglichen Rostteiles und damit bei einem federnden Nachgeben der unteren, zweiten Abdichtungs-Rahmenplatte 14 letztere gegenüber der oberen, ersten Abdichtungs-Rahmenplatte 13 in Querrichtung in ihrer Position gehalten werden kann, und zwar durch die oben bereits erwähnte Positions-Führungseinrichtung 22. Diese Positions-Führungseinrichtung 22 enthält bei dem veranschaulichten Ausführungsbeispiel zwei am Zuführkanalende 11a auf einander gegenüberliegenden Seiten (Längsseiten) der Gasauströmöffnung 11b fest angebrachte Führungsvorsprünge 30, die gegen die obere, erste Abdichtungs-Rahmenplatte 13 weisen und beispielsweise durch flache Führungsleisten gebildet sein können. An den Längsseiten der zweiten Abdichtungs-Rahmenplatte 14 sind ebenfalls zur Positions-Führungseinrichtung 22 gehörende Führungsausnehmungen 31 vorgesehen, die - wie Fig.6 zeigt - etwa gabelförmig (als Führungsgabeln) ausgeführt sein können und von denen jede mit einem der beiden Führungsvorsprünge 30 in Gleitführungseingriff steht. Diese Führungsausnehmungen (Führungsgabeln) 31 können einstückig an den beiden Längsseiten der unteren Abdichtungs-Rahmenplatte 14 angeformt oder gesondert angebracht sein; zweckmäßig liegen sich die Führungsvorsprünge 30 und Führungsausnehmungen 31 - wie Fig.4 zeigt - etwa auf halber Länge der Rahmenplatten-Längsseiten direkt einander gegenüber.

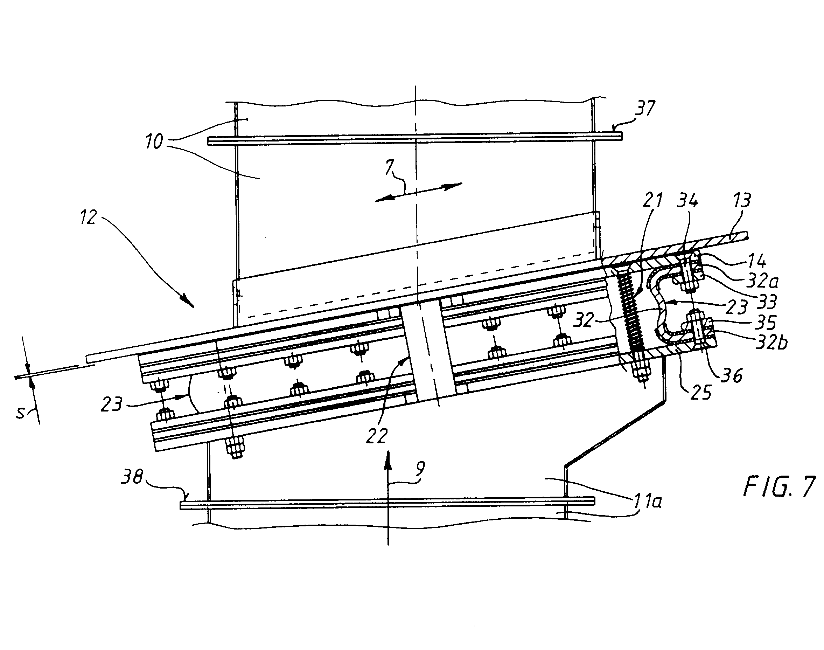

Anhand Fig.7 sei zunächst eine weitere Ausführungsmöglichkeit für die Ausbildung der flexiblen Dichtungseinrichtung 23 erläutert, d.h. bei dem Ausführungsbeispiel gemäß Fig.7 handelt es sich gewissermaßen um eine Ausführungsvariante des zuvor anhand der Fig.4 bis 6 erläuterten Ausführungsform der Kompensationseinrichtung 12, so daß alle gleichen Einrichtungsteile mit denselben Bezugszeichen versehen werden können wie im vorhergehenden Beispiel (soweit erforderlich).

Auch in diesem Ausführungsbeispiel (Fig.7) ist die Kompensationseinrichtung 12 im Bereich bzw. Übergang zwischen dem ortsfesten bzw. feststehenden Zuführkanalende 11a und dem in Richtung des Doppelpfeiles 7 hinund herbeweglichen Kühlgas-Anschlußstutzen 10 angeordnet. Die beiden einander gegenüberliegenden Abdichtungs-Rahmenplatten 13 und 14 können ebenfalls durch Stellschrauben-Druckfeder-Anordnungen 21 einstellbar gehaltert und durch zwei sich auf den Längsseiten gegenüberliegende Positions Positions-Führungseinrichtungen 22 geführt sein, wie es anhand der Fig.4 bis 6 im einzelnen erläutert worden ist.

Im Gegensatz zum vorhergehenden Beispiel ist bei dieser Ausführungsvariante gemäß Fig.7 die flexible Dichtungseinrichtung 23 im wesentlichen durch einen die Gasausströmöffnung 11b des Zuführkanalendes 11a umgebenden Gewebeschlauch 32 gebildet, der gewissermaßen einen flexiblen Gewebekompensator darstellt und aus einem temperaturbeständigen Gewebematerial, wie z.B. silikonbeschichtetem Glasfasergewebe, hergestellt ist. Wie im rechten Teil der Fig.7 im Teilschnitt veranschaulicht ist, kann das obere Ende 32a des Gewebeschlauches 32 zwischen dem äußeren Randumfang der zweiten Abdichtungs-Rahmenplatte 14 und einem Klemmflansch 33 sowie mittels Schrauben 34 lösbar festgelegt sein, während das untere Schlauchende 32b in ähnlicher Weise zwischen dem festen Flansch 25 des Zuführkanalendes 11a und einem weiteren Klemmflansch 35 sowie mittels Schrauben 36 festgespannt sein kann. Auf diese Weise ergibt sich ebenfalls eine gasdichte Abdichtung zwischen dem feststehenden Zuführkanalende 11a und der dazu nachgiebig gehalterten zweiten Abdichtungs-Rahmenplatte 14.

Wie ein Vergleich zwischen den Ausführungsbeispielen der Fig.3 bis 6 einerseits und dem Ausführungsbeispiel gemäß Fig.7 andererseits ferner deutlich macht, bestehen bei diesem erfindungsgemäßen Schubrostkühler die Möglichkeiten, die wesentlichen Teile der Kompensationseinrichtung 12, nämlich die Abdichtungs-Rahmenplatten 13 und 14 direkt an die entsprechenden Gaskanäle (10 und 11a) anzubauen oder die bzw. jede Kompensationseinrichtung 12 entsprechend der Darstellung in Fig.7 als gesonderte Baueinheit auszubilden und im Übergang vom gehäuseinneren, oberen Ende 11a des zugehörigen ortsfesten Kühlgas-Zuführungskanales zum hin- und herbeweglichen Kühlgas-Anschlußstutzen 10 einzubauen, und zwar vorzugsweise durch entsprechende Flanschverbindungen 37 bzw. 38. Solche gesonderten Baueinheiten als Kompensationseinrichtungen 12 lassen sich dann auf äußerst einfache Weise auch in evtl. bereits vorhandenen Schubrostkühlern nachträglich einbauen.

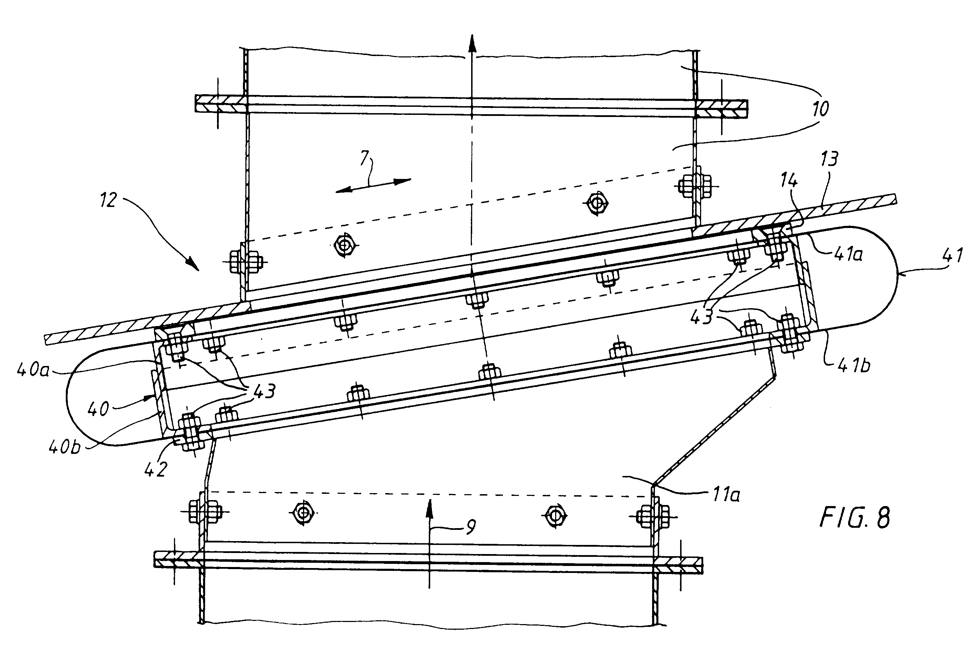

Fig.8 veranschaulicht ein weiteres Ausführungsbeispiel dafür, wie jede erfindungsgemäß vorgesehene Kompensationseinrichtung 12 ausgeführt sein kann, ohne daß das anhand der Fig.1 bis 3 beschriebene Grundprinzip der Erfindung verlassen wird. Dementsprechend ist diese Kompensationseinrichtung 12 wiederum im Bereich bzw. Übergang zwischen dem ortsfesten Zuführkanalende 11a und dem in Richtung des Doppelpfeiles 7 hin- und herbeweglichen Kühlgas-Anschlußstutzen 10 angeordnet, der genau gleichartig ausgeführt und mit einer ersten Abdichtungs-Rahmenplatte 13 versehen sein kann, wie es insbesondere anhand der Fig.3 weiter oben detailliert beschrieben worden ist. Auch die der beweglichen ersten Abdichtungs-Rahmenplatte 13 gegenüberliegende und damit zusammenwirkende zweite Abdichtungs-Rahmenplatte 14 ist grundsätzlich wiederum am feststehenden Zuführkanalende 11a angeordnet.

Darüber hinaus wird es auch bei diesem Ausführungsbeispiel gemäß Fig.8 als vorteilhaft angesehen, die untere, zweite Abdichtungs-Rahmenplatte 14 federnd bzw. nach unten nachgiebig am gehäuseinneren Zuführkanalende 11a zu haltern. Zu diesem Zweck ist diese untere, zweite Abdichtungs-Rahmenplatte 14 auf dem oberen Ende eines Teleskoprahmens 40 befestigt, der auf seiner Außenumfangsseite von einem im Querschnitt etwa U-förmig gebogenen, dünnen Kompensations-Dichtungsblech 41 umgeben bzw. umschlossen ist. Dieses Dichtungsblech 41 kann im allgemeinen ein einfaches dünnes Stahlblech sein, wobei es etwa in Fällen, in denen besonders starke Federeigenschaften gewünscht werden, mitunter auch aus einem dünnen Federstahlblech hergestellt sein kann. In jedem Falle umschließt dieses Kompensations-Dichtungsblech 41 jedoch den Teleskoprahmen 40 abdichtend, wobei es in den Eckbereichen des Teleskoprahmens 40 - bei einer Grundrißbetrachtung dieses Teleskoprahmens - mit einem geeigneten Radius abgerundet ist. Derartige Kompensations-Dichtungsbleche sind im einschlägigen Handel als sogenannte "Stahlwellen-Kompensatoren" grundsätzlich bekannt.

Wie die Darstellung in Fig.8 ferner zeigt, weist der Teleskoprahmen 40 zwei Einzelrahmen, nämlich einen oberen Einzelrahmen 40a und einen unteren Einzelrahmen 40b auf, die je aus Winkelstahlprofilen, vorzugsweise aus ungleichschenkligen Winkelstahlprofilen zusammengebaut sind. Dabei sind die im Prinzip gleichartig konstruierten Einzelrahmen 40a und 40b nur in ihrer Querschnittsabmessung etwas unterschiedlich derart ausgeführt, daß sie passend ineinandergreifen und dabei teleskopartig gegeneinander verschiebbar sind, wobei sie mit ihren ineinandergreifenden Rahmenabschnitten - wie Fig.8 erkennen läßt - gleichzeitig eine geradlinige Führung sowie zumindest eine Teilabdichtung des daraus gebildeten Teleskoprahmens 40 bilden. In Fig.8 ist auch zu erkennen, daß von den ungleichschenkligen Winkelstahlprofilen beider Einzelrahmen 40a, 40b jeweils die längeren Schenkel der Winkelstahlprofile gegeneinander gerichtet sind und ineinandergreifen, so daß sie sich ausreichend weit überlappen und dadurch eine besonders günstige Teleskopführung und -abdichtung schaffen können. Bei dieser in Fig.8 veranschaulichten Ausführung der Kompensationseinrichtung 12 kann der obere U-Schenkel 41a des Dichtungsbleches 41 zwischen der Oberseite des oberen Einzelrahmens 40a und der zweiten Abdichtungs-Rahmenplatte 14 und der untere U-Schenkel 41b des Dichtungsbleches 41 zwischen dem unteren Ende des unteren Einzelrahmens 40b und einem Zusatzflansch 42 mit Hilfe von Schrauben 43 eingeklemmt sein.

Diese Ausführungsform gemäß Fig.8 stellt somit bei relativ einfacher Ausführung eine besonders robuste Konstruktion für eine federnde bzw. nach unten nachgiebige Halterung der unteren, zweiten Abdichtungs-Rahmenplatte 14 am gehäuseinneren Zuführkanalende 14a dar.

Generell sei noch darauf hingewiesen, daß jede zuvor erläuterte Ausführungsform der Kompensationseinrichtungen 12 zwar besonders bevorzugt an einen zugehörigen Kühlgas-Anschlußstutzen 10 angeschlossen ist, der an der Unterseite eines Hohlträgers 8 des Schwingrahmens befestigt ist, und zwar entsprechend der detaillierten Erläuterung anhand der Fig.1 und 2. Darüber hinaus ist es jedoch im Bedarfsfalle grundsätzlich auch möglich, daß die mit dem Schwingrahmen mitbewegten Kühlgas-Anschlußstutzen 10 unmittelbar an den hohlen Rostplattenträgern 6, und zwar vorzugsweise an deren Unterseite befestigt sein können, wobei eine zugehörige Kompensationseinrichtung 12 dann wiederum für eine Leitungsverbindung dieser an den Rostplattenträgern 6 befestigten, aber wiederum mit dem Schwingrahmen mitbewegten Kühlgas-Anschlußstutzen 10 und dem zugehörigen ortsfesten Kühlgas-Zuführkanal 11 sorgen.

Schließlich sei auch noch erwähnt, daß es ohne weiteres möglich ist, bestimmte Bauteile der verschiedenen, zuvor beschriebenen Ausführungsbeispiele, insbesondere der verschiedenen Ausführungsformen der Kompensationseinrichtung 12, sinnvoll miteinander zu kombinieren.

## Patentansprüche

1. Schubrostkühler für heißes Kühlgut, enthaltend
a) eine in einem Kühlergehäuse (1) angeordnete Rostfläche (2) aus einer Vielzahl von Rostplatten (3, 4), die von einem Kühlgas von unten nach oben durchströmt werden und von denen zumindest ein Teil als bewegliche Rostplatten (3) vorgesehen und über hohle Rostplattenträger (6) auf wenigstens einem in Längsrichtung (7) des Kühlers hin- und herbeweglichen Schwingrahmen abgestützt ist, wobei die Rostplattenträger gleichzeitig Kühlgas-Zuführleitungen zu den beweglichen Rostplatten (3) bilden und wobei wenigstens ein mitbewegter Kühlgas-Anschlußstutzen (10) vorhanden ist,
b) wenigstens einen in den Unterteil (1a) des Kühlergehäuses (1) hineinragenden, ortsfesten Kühlgas-Zuführkanal (11), der durch eine Kompensationseinrichtung (12) mit dem mitbewegten Kühlgas-Anschlußstutzen (10) in Leitungsverbindung steht,
dadurch gekennzeichnet, daß
c) jede Kompensationseinrichtung (12) zwei sich mit geringem Spaltabstand (s) gegenüberliegende, parallel zueinander und parallel zur Bewegungsrichtung (7) des Schwingrahmens (8) verlaufende Abdichtungs-Rahmenplatten (13, 14) enthält, von denen die erste Abdichtungs-Rahmenplatte (13) am zugehörigen mitbewegten Kühlgas-Anschlußstutzen (10) sowie unmittelbar vor dessen Gaseinströmöffnung (10a) und die zweite Abdichtungs-Rahmenplatte (14) am gehäuseinneren Ende (11a) des zugehörigen, ortsfesten Kühlgas-Zuführkanales (11) sowie unmittelbar vor dessen Gasausströmöffnung (11b) befestigt ist.

2. Schubrostkühler nach Anspruch 1, dadurch gekennzeichnet, daß die Rahmenöffnung (13a) der ersten Abdichtungs-Rahmenplatte (13) dem Mündungsquerschnitt der Gaseinströmöffnung (10a) des Kühlgas-Anschlußstutzens (10) und die Rahmenöffnung (14a) der zweiten Abdichtungs-Rahmenplatte (14) dem Mündungsquerschnitt der Gasausströmöffnung (11b) des gehäuseinneren Endes (11a) des Kühlgas-Zuführkanales (11) angepaßt ist, wobei diese beiden sich gegenüberliegenden und zueinander ausgerichteten Mündungsquerschnitte eine im wesentlichen gleich große Breite (B) besitzen, der eine Mündungsquerschnitt jedoch eine wenigstens um das Ausmaß (BL) der Hin- und Herbewegung des Schwingrahmens (8) vergrößerte Länge (L) aufweist.

3. Schubrostkühler nach Anspruch 2, dadurch gekennzeichnet, daß der Mündungsquerschnitt der Gasausströmöffnung (11b) am gehäuseinneren Ende (11a) des (jedes) feststehenden Kühlgas-Zuführkanales (11) und dementsprechend die lichte Rahmenöffnung (14a) der feststehenden zweiten Abdichtungs-Rahmenplatte (14) wenigstens um das Ausmaß (BL) der Hin- und Herbewegung des Schwingrahmens (8) verlängert ist und die erste Abdichtungs-Rahmenplatte (13) eine wenigstens um das Ausmaß (BL) der Hin- und Herbewegung vergrößerte Gesamtlänge (GL) derart aufweist, daß die zweite Abdichtungs-Rahmenplatte (14) durch die erste Abdichtungs-Rahmenplatte (13) während der ganzen Hin- und Herbewegung des Schwingrahmens stets abgedeckt ist.

4. Schubrostkühler nach Anspruch 3, dadurch gekennzeichnet, daß der lichte Mündungsquerschnitt des gehäuseinneren Endes (11a) des Kühlgas-Zuführkanales (11) sich bei gleichbleibender Breite (B) in Richtung auf den gegenüberliegenden Kühlgas-Anschlußstutzen (10) auf eine vergrößerte Länge (L) trichterförmig erweitert.

5. Schubrostkühler nach Anspruch 1, dadurch gekennzeichnet, daß von den beiden sich gegenüberliegenden Abdichtungs-Rahmenplatten (13, 14) jeder Kompensationseinrichtung (12) wenigstens eine unter Einstellung eines definierten lichten Spaltabstandes (s) relativ gegen die andere verstellbar ist.

6. Schubrostkühler nach Anspruch 5, dadurch gekennzeichnet, daß die erste Abdichtungs-Rahmenplatte (13) jeder Kompensationseinrichtung (12) durch erste Langloch-Schraubverbindungen (15) am zugehörigen Kühlgas-Anschlußstutzen (10) verstellbar befestigt und dabei um den Kühlgas-Anschlußstutzen (10) ein umlaufender erster Halterungskragen (17) angebracht ist, an dessen Außenseite ein parallel dazu verlaufender, etwa rohrförmiger erster Halterungsteil (18) für die erste Abdichtungs-Rahmenplatte (13) abgedichtet und teleskopartig verschiebbar über diese ersten Langloch-Schraubverbindungen (15) gehaltert ist.

7. Schubrostkühler nach Anspruch 6, dadurch gekennzeichnet, daß beide Abdichtungs-Rahmenplatten (13, 14) relativ gegeneinander verstellbar sind.

8. Schubrostkühler nach Anspruch 7, dadurch gekennzeichnet, daß die zweite Abdichtungs-Rahmenplatte (14) jeder Kompensationseinrichtung (12) durch zweite Langloch-Schraubverbindungen (16) am gehäuseinneren Ende (11a) des zugehörigen Kühlgas-Zuführkanales (11) verstellbar befestigt und dabei um dieses gehäuseinnere Ende (11a) ein zweiter Halterungskragen (19) angebracht ist, an dessen Außenseite ein parallel dazu verlaufender, rohrförmiger zweiter Halterungsteil (20) für die zweite Abdichtungs-Rahmenplatte (14) abgedichtet und teleskopartig verschiebbar mittels der zweiten Langloch-Schraubverbindung gehaltert ist.

9. Schubrostkühler nach Anspruch 7, dadurch gekennzeichnet, daß die untere, zweite Abdichtungs-Rahmenplatte (14) durch mehrere über deren Umfang verteilte, justierbare Stellschrauben-Druckfeder-Anordnungen (21) am gehäuseinneren Ende (11a) des zugehörigen ortsfesten Kühlgas-Zuführkanales (11) verstellbar und gegenüber diesem Zuführkanalende nachgiebig gehaltert ist, wobei zwischen der zweiten Abdichtungs-Rahmenplatte (14) und diesem Zuführkanal-ende (11a) zum einen eine Positions-Führungseinrichtung (22) und zum andern eine flexible Dichtungseinrichtung (23) angeordnet ist.

10. Schubrostkühler nach Anspruch 9, dadurch gekennzeichnet, daß die Positions-Führungseinrichtung (22) zwei am Zuführkanalende (11a) auf einander gegenüberliegenden Seiten der Gaseinströmöffnung (11b) fest angebrachte, gegen die erste Abdichtungs-Rahmenplatte (13) weisende Führungsvorsprünge (30) sowie zwei an den Längsseiten der zweiten Abdichtungs-Rahmenplatte (14) vorgesehene Führungsausnehmungen (31) enthält, von denen jede mit einem der beiden Führungsvorsprünge (30) in Führungsgleiteingriff steht.

11. Schubrostkühler nach Anspruch 10, dadurch gekennzeichnet, daß die flexible Dichtungseinrichtung (23) eine in einen die Gasausströmöffnung (11b) des Zuführkanalendes (11a) umgebenden Führungskanal (27) eingelegte elastische Dichtung (28) aus temperaturbeständigem Material sowie einen an der Unterseite der zweiten Abdichtungs-Rahmenplatte (14) befestigte um deren Rahmenöffnung (14a) umlaufenden Dichtungsrahmen (29) aufweist, der in den Führungskanal eingreift und federnd gegen die darin befindliche elastische Dichtung gedrückt ist.

12. Schubrostkühler nach Anspruch 10, dadurch gekennzeichnet, daß die flexible Dichtungseinrichtung (23) einen die Gasausströmöffnung (11b) des Zuführkanalendes (11a) umgebenden Gewebeschlauch (32) enthält, der aus einem temperaturbeständigen Gewebematerial, wie silikonbeschichtetem Glasfasergewebe, hergestellt und dessen eines Ende (32a) an der zweiten Abdichtungs-Rahmenplatte (14) und dessen anderes Ende (32b) an einem am Zuführkanalende angebrachten Halterungsflansch (25) abgedichtet befestigt, vorzugsweise angeschraubt ist.

13. Schubrostkuhler nach Anspruch 5, dadurch gekennzeichnet, daß die untere, zweite Abdichtungs-Rahmenplatte (14) auf einem Teleskoprahmen (40) befestigt ist, der auf seiner Außenumfangsseite von einem im Querschnitt etwa U-förmig gebogenen, dünnen Kompensations-Dichtungsblech (41) umgeben ist.

14. Schubrostkühler nach Anspruch 13, dadurch gekennzeichnet, daß der Teleskoprahmen (40) zwei je aus Winkelstahlprofilen, vorzugsweise ungleichschenkligen Winkelstahlprofilen zusammengebaute Einzelrahmen (40a, 40b) aufweist, die passend ineinandergreifen und teleskopartig gegeneinander verschiebbar sind, wobei sie mit ihren ineinandergreifenden Rahmenabschnitten gleichzeitig eine geradlinige Führung und zumindest eine Teilabdichtung bilden.

15. Schubrostkühler nach Anspruch 1, dadurch gekennzeichnet, daß jede Kompensationseinrichtung (12) als gesonderte Baueinheit ausgebildet und im Übergang vom gehäuseinneren, oberen Ende (11a) des zugehörigen ortsfesten Kühlgas-Zuführkanales (11) zum hinund herbeweglichen Kühlgas-Anschlußstutzen (10) - vorzugsweise über Flanschverbindungen (37, 38) - angebaut ist.

16. Schubrostkühler nach Anspruch 1, dadurch gekennzeichnet, daß der Schwingrahmen Hohlträger (8) aufweist, auf denen die querverlaufenden Rostplattenträger (6) der beweglichen Rostplatten (3) befestigt sind und mit denen diese hohlen Rostplattenträger in Leitungsverbindung stehen, wobei die mitbewegten Kühlgas-Anschlußstutzen (10) an diese Hohlträger (8) angeschlossen sind.

17. Schubrostkühler nach Anspruch 1, dadurch gekennzeichnet, daß die mit dem Schwingrahmen mitbewegten Kühlgas-Anschlußstutzen (10) unmittelbar an den hohlen Rostplattenträgern, vorzugsweie an deren Unterseite befestigt sind.

## Claims

1. Reciprocating grate cooler for hot material for cooling, comprising
a) a grate surface (2) disposed in a cooler housing (1) and consisting of a plurality of grate plates (3, 4) through which a cooling gas flows upwards from below and of which at least some are provided as movable grate plates (3) and are supported by way of hollow grate plate supports (6) on at least one movable frame which is movable to and fro in the longitudinal direction (7) of the cooler, wherein the grate plate supports simultaneously form cooling gas delivery lines to the movable grate plates (3) and at least one cooling gas connection piece (10) is provided which is moved therewith,
b) at least one stationary cooling gas delivery channel (11) which projects into the lower part (1a) of the cooler housing (1) and is in ducting communication by way of a compensating arrangement (12) with the cooling gas connection piece (10) which is moved therewith,
characterised in that
c) each compensating arrangement (12) comprises two sealing frame plates (13, 14) which lie opposite one another with a small gap (s) and extend parallel to one another and parallel to the direction of movement (7) of the movable frame (8), and of these two sealing frame plates the first sealing frame plate (13) is fixed on the appertaining cooling gas connection piece (10) which is movable to and fro as well as immediately before the gas inlet opening (10a) thereof and the second sealing frame plate (14) is fixed on the end (11a) of the appertaining stationary cooling gas delivery channel (11) inside the housing as well as immediately before the gas outlet opening (11b) thereof.

2. Reciprocating grate cooler as claimed in Claim 1, characterised in that the frame opening (13a) of the first sealing frame plate (13) is adapted to the orifice cross-section of the gas inlet opening (10a) of the cooling gas connection piece (10) and the frame opening (14a) of the second sealing frame plate (14) is adapted to the orifice cross-section of the gas outlet opening (11b) of the end (11a) of the cooling gas delivery channel (11) inside the housing, wherein these two orifice cross-sections, which lie opposite one another and are aligned with each other, have substantially the same width (B), but one cross-section has a length (L) which is greater at least by the dimension (BL) of the movement to and fro of the movable frame (8).

3. Reciprocating grate cooler as claimed in Claim 2, characterised in that the orifice cross-section of the gas outlet opening (11b) on the end (11a) of the (each) stationary cooling gas delivery channel (11) inside the housing and accordingly the clear frame opening (14a) of the stationary second sealing frame plate (14) is lengthened at least by the dimension (BL) of the movement to and fro of the movable frame (8) and the first sealing frame plate (13) has an overall length (GL) which is greater at least by the dimension (BL) of the movement to and fro in such a way that the second sealing frame plate (14) is always completely covered by the first sealing frame plate (13) during the entire movement to and fro of the movable frame.

4. Reciprocating grate cooler as claimed in Claim 3, characterised in that with the width (B) remaining constant the clear orifice cross-section of the end (11a) of the cooling gas delivery channel (11) inside the housing widens in a funnel shape in the direction of the opposing cooling gas connection piece (10) to an increased length (L).

5. Reciprocating grate cooler as claimed in Claim 1, characterised in that of the two opposing sealing frame plates (13, 14) of each compensating arrangement (12) at least one can be adjusted relative to the other by setting a defined clear gap (s).

6. Reciprocating grate cooler as claimed in Claim 5, characterised in that the first sealing frame plate (13) of each compensating arrangement (12) is adjustably fixed on the appertaining cooling gas connection piece (10) by first slot and screw connections (15) and in this case around the cooling gas connection piece (10) is fixed a first retaining collar (17) which runs all round and on the outer face of which an approximately tubular first retaining part (18), extending parallel thereto, for the first sealing frame plate (13) is retained so that it is sealed and telescopically movable by way of these first slot and screw connections (15).

7. Reciprocating grate cooler as claimed in Claim 6, characterised in that both sealing frame plates 13, 14) are adjustable relative to one another.

8. Reciprocating grate cooler as claimed in Claim 7, characterised in that the second sealing frame plate (14) of each compensating arrangement (12) is adjustably fixed on the end (11a) of the appertaining cooling gas delivery channel (11) inside the housing by second slot and screw connections (16) and in this case around the end (11a) inside the housing is fixed a second retaining collar (19), on the outer face of which a tubular second retaining part (20), extending parallel thereto, for the second sealing frame plate (14) is retained so that it is sealed and telescopically movable by way of the second slot and screw connections.

9. Reciprocating grate cooler as claimed in Claim 7, characterised in that the lower second sealing frame plate (14) is retained by a plurality of adjustable setscrew and compression spring arrangements (21) , which are distributed over the periphery of the said sealing frame plate, so that it is movable on the end (11a) of the appertaining stationary cooling gas delivery channel (11) inside the housing and retained resiliently relative to this end of the delivery channel, wherein between the second sealing frame plate (14) and this end (11a) of the delivery channel there is disposed on the one hand a position guiding arrangement (22) and on the other hand a flexible sealing arrangement (23).

10. Reciprocating grate cooler as claimed in Claim 9, characterised in that the position guiding arrangement (22) comprises two guide projections (30) which are fixed on the end (11a) of the delivery channel on opposing sides of the gas inlet opening (11b) and are directed towards the upper first sealing frame plate (13) as well as two guide recesses (31) which are provided on the long sides of the second sealing frame plate (14) and of which each one is in guided sliding engagement with one of the two guide projections (30).

11. Reciprocating grate cooler as claimed in Claim 10, characterised in that the flexible sealing arrangement (23) has an elastic seal (28) laid in a guide channel (27) surrounding the gas outlet opening (11b) of the end (11a) of the delivery channel as well as a sealing frame (29) fixed on the underside of the second sealing frame plate (14) and running around the frame opening (14a), the said sealing frame engaging in the guide channel and being pressed in a sprung manner against the elastic seal located therein.

12. Reciprocating grate cooler as claimed in Claim 10, characterised in that the flexible sealing arrangement (23) comprises a fabric hose (32) which surrounds the gas outlet opening (11b) of the end (11a) of the delivery channel and is produced from a temperature-resistant fabric material, such as silicon-coated glass fibre fabric, one end (32a) of the said fabric chose being fixed, preferably screwed, and sealed on the second sealing frame plate (14) whilst the other end (32b) thereof is fixed, preferably screwed, and sealed on a retaining flange (25) attached to the end of the delivery channel.

13. Reciprocating grate cooler as claimed in Claim 5, characterised in that the lower second sealing frame plate (14) is fixed on a telescopic frame (40) which is surrounded on its outer peripheral face by a thin compensating sealing plate (41) which is curved approximately in a U shape in cross-section.

14. Reciprocating grate cooler as claimed in Claim 13, characterised in that the telescopic frame (40) has two individual frames (40a, 40b), each of which is made up of angled steel sections, preferably of unequal-sided angled steel sections, which interengage and fit into one another and can be pushed telescopically towards one another, so that with their interengaging frame portions they simultaneously form a straight guide as well as at least a partial seal.

15. Reciprocating grate cooler as claimed in Claim 1, characterised in that each compensating arrangement (12) is constructed as a separate structural unit and built on, preferably by way of flange connections (37, 38), in the transition from the upper end (11a) of the appertaining stationary cooling gas delivery channel (11) inside the housing to the cooling gas connection piece (10) which is movable to and from.

16. Reciprocating grate cooler as claimed in Claim 1, characterised in that the movable frame has hollow girders (8) on which the transversely extending grate plate supports (6) of the movable grate plates (3) are fixed and with which these hollow grate plate supports are in ducting communication, so that the cooling gas connection pieces (10) are connected to these hollow girders (8).

17. Reciprocating grate cooler as claimed in Claim 1, characterised in that the cooling gas connection pieces (10) moved with the movable frame are fixed directly onto the hollow grate plate supports, preferably on the underside thereof.

## Revendications

1. Refroidisseur à grilles poussantes pour matière chaude à refroidir, comprenant
a) une surface de grille (2) disposée dans une enveloppe de refroidisseur (1) et se composant de plusieurs plaques de grille (3, 4) qui sont balayées de bas en haut par un gaz de refroidissement et dont au moins une partie est prévue en plaques mobiles de grille (3) et prend appui par l'intermédiaire de supports creux (6) de plaque de grille sur au moins un châssis oscillant mobile alternativement dans la direction de la longueur (7) du refroidisseur, les supports de plaque de grille formant également des conduits d'arrivée de gaz de refroidissement sur les plaques mobiles de grille (3) et au moins une tubulure de raccord à l'arrivée de gaz de refroidissement (10) qui accompagne les mouvements étant prévue,
b) au moins un canal fixe (11) d'arrivée de gaz de refroidissement qui pénètre dans la partie inférieure (1a) de l'enveloppe (1) du refroidisseur et qui est en communication de transmission au moyen d'un dispositif de compensation (12) avec la tubulure du raccord à l'arrivée de gaz de refroidissement (10) qui accompagne les mouvements,
caractérisé en ce que
c) chaque dispositif de compensation (12) comprend deux plaques de cadre d'étanchéité (13, 14) qui se font face à une faible distance d'intervalle (s), qui sont parallèles l'une à l'autre et parallèles à la direction du mouvement (7) du châssis oscillant (8) et dont la première plaque de cadre d'étanchéité (13) est fixée à la tubulure correspondante (10) de raccord à l'arrivée de gaz de refroidissement qui accompagne les mouvements, cette première plaque se trouvant directement devant l'orifice (10a) d'admission de gaz de cette tubulure et dont la deuxième plaque de cadre d'étanchéité (14) est fixée à l'extrémité (11a), située dans l'enveloppe, du canal correspondant fixe (11) d'arrivée de gaz de refroidissement et se trouve directement devant l'orifice (11b) de sortie de gaz de ce canal.

2. Refroidisseur à grilles poussantes selon la revendication 1, caractérisé en ce que l'orifice (13a) du cadre de la première plaque de cadre d'étanchéité (13) est adapté à la section de l'embouchure de l'orifice (10a) d'admission de gaz de la tubulure (10) de raccord à l'arrivée de gaz de refroidissement et l'orifice (14a) du cadre de la deuxième plaque de cadre d'étanchéité (14) est adapté à la section de l'embouchure de l'orifice (11b) de sortie du gaz de l'extrémité (11a), située dans l'enveloppe, du canal d'arrivée de gaz de refroidissement (11), ces deux sections d'embouchure, qui se font face et sont tournées l'une vers l'autre, ayant sensiblement une même largeur (B), mais une section d'embouchure ayant une longueur (L) agrandie au moins dans la mesure (BL) du mouvement alternatif du châssis oscillant.

3. Refroidisseur à grilles poussantes selon la revendication 2, caractérisé en ce que la section de l'embouchure de l'orifice (11b) de sortie de gaz de refroidissement est allongée à l'extrémité (11a), située dans l'enveloppe, du (de chaque) canal fixe (11) d'arrivée de gaz de refroidissement et en conséquence l'orifice (14a) de l'ouverture du cadre de la deuxième plaque fixe de cadre d'étanchéité (14) est allongée au moins dans la mesure (BL) du mouvement alternatif du châssis oscillant (8) et la première plaque de cadre d'étanchéité (13) a une longueur globale (GL) qui est agrandie au moins dans la mesure (BL) du mouvement alternatif de manière que la deuxième plaque de cadre d'étanchéité (14) soit toujours recouverte par la première plaque de cadre d'étanchéité (13) pendant la totalité du mouvement alternatif du châssis oscillant.

4. Refroidisseur à grilles poussantes selon la revendication 3, caractérisé en ce que la section de l'ouverture de l'embouchure de l'extrémité (11a), située dans l'enveloppe, du canal (11) d'arrivée de gaz de refroidissement s'élargit en trémie vers la tubulure opposée (10) de raccord à l'arrivée de gaz de refroidissement de manière à avoir une longueur agrandie (L) tout en conservant une largeur constante (B).

5. Refroidisseur à grilles poussantes selon la revendication 1, caractérisé en ce qu'au moins l'une des deux plaques de cadre d'étanchéité opposées (13, 14) de chaque dispositif de compensation (12) est déplaçable par rapport à l'autre pour le réglage d'une distance d'intervalle libre défini (s).

6. Refroidisseur à grilles poussantes selon la revendication 5, caractérisé en ce que la première plaque de cadre d'étanchéité (13) de chaque dispositif de compensation (12) est montée déplaçable au moyen de premiers assemblages à boutonnière et boulon (15) sur la tubulure correspondante (10) de raccord à l'arrivée de gaz de refroidissement et de plus un premier collet circonférentiel de montage (17) est placé autour de la tubulure (10) de raccord à l'arrivée de gaz de refroidissement, une première partie sensiblement tubulaire de montage (18) qui lui est parallèle et destinée à la première plaque de cadre d'étanchéité (13) étant montée sur le côté extérieur de ce collet de manière hermétique et déplaçable télescopiquement au moyen de ces premiers assemblages à boutonnière et boulon.

7. Refroidisseur à grilles poussantes selon la revendication 6, caractérisé en ce que les deux plaques de cadre d'étanchéité (13, 14) sont déplaçables l'une par rapport à l'autre.

8. Refroidisseur à grilles poussantes selon la revendication 7, caractérisé en ce que la deuxième plaque de cadre d'étanchéité (14) de chaque dispositif de compensation (12) est montée déplaçable au moyen de deuxièmes assemblages à boutonnière et boulon (16) sur l'extrémité (11a), située dans l'enveloppe, du canal correspondant d'arrivée de gaz de refroidissement (11) et de plus un deuxième collet de montage (19) est fixé autour de cette extrémité (11a) située dans l'enveloppe, une deuxième partie tubulaire de montage (20) qui lui est parallèle et destinée à la deuxième plaque de cadre d'étanchéité (14) étant montée sur le côté extérieur de ce collet et étant déplaçable hermétiquement et télescopiquement au moyen des deuxièmes assemblages à boutonnière et boulon.

9. Refroidisseur à grilles poussantes selon la revendication 7, caractérisé en ce que la deuxième plaque inférieure de cadre d'étanchéité (14) est montée déplaçable par plusieurs ensembles ajustables à vis de réglage et ressort de compression, qui sont répartis à sa circonférence, à l'extrémité (11a), située dans l'enveloppe, du canal correspondant fixe d'arrivée de gaz de refroidissement (11) et est disposée souplement par rapport à cette extrémité de canal d'arrivée et d'une part un dispositif (22) de guidage de position et d'autre part un dispositif souple d'étanchéité (23) sont disposés entre la deuxième plaque de cadre d'étanchéité (14) et cette extrémité (11a) du canal d'arrivée.

10. Refroidisseur à grilles poussantes selon la revendication 9, caractérisé en ce que le dispositif de guidage de position (22) comprend deux épaulements de guidage (30) orientés vers la première plaque de cadre d'étanchéité (13), fixés à l'extrémité (11a) du canal d'arrivée sur des côtés opposés de l'orifice (11b) d'admission de gaz, ainsi que deux évidements de guidage (31) prévus sur les côtés longs de la deuxième plaque de cadre d'étanchéité (14), chacun de ceux-ci étant en prise de guidage à glissement avec l'un des deux épaulements de guidage (30).

11. Refroidisseur à grilles poussantes selon la revendication 10, caractérisé en ce que le dispositif souple d'étanchéité (23) comprend une garniture élastique (28) en matière résistant aux températures qui est logée dans un canal de guidage (27) entourant l'orifice (11b) de sortie de gaz de l'extrémité (11a) du canal d'arrivée, ainsi qu'un cadre circonférentiel d'étanchéité (29) fixé au côté inférieur de la deuxième plaque de cadre d'étanchéité (14) autour de l'orifice (14a) du cadre de cette dernière, ce cadre d'étanchéité (29) pénétrant dans le canal de guidage et exerçant une pression élastique contre la garniture élastique qui s'y trouve.

12. Refroidisseur à grilles poussantes selon la revendication 10, caractérisé en ce que le dispositif souple d'étanchéité (23) comprend un flexible en tissu (32) entourant l'orifice (11b) de sortie du gaz de l'extrémité (11a) du canal d'arrivée et réalisé en un tissu résistant aux températures, tel qu'un tissu en fibres de verre enduit de silicone, l'une de ses extrémités (32a) étant fixée hermétiquement, de préférence assujettie par vissage à la deuxième plaque de cadre d'étanchéité (14) et son autre extrémité (32b) étant fixée hermétiquement, de préférence assujettie par vissage sur un flasque de montage (25) fixé à l'extrémité du canal d'arrivée.

13. Refroidisseur à grilles poussantes selon la revendication 5, caractérisé en ce que la deuxième plaque inférieure de cadre d'étanchéité (14) est fixée à un cadre télescopique (40) dont le côté circonférentiel extérieur est entouré d'une tôle d'étanchéité mince de compensation (41) qui est recourbée à peu près à la forme d'un étrier en coupe transversale.

14. Refroidisseur à grilles poussantes selon la revendication 13, caractérisé en ce que le cadre télescopique (40) comprend deux cadres individuels (40a, 40b) dont chacun est formé d'un assemblage de profilés d'acier en cornière, de préférence de profilés d'acier en cornière à ailes inégales, ces cadres individuels s'emboîtant à ajustement et étant déplaçables télescopiquement l'un par rapport à l'autre, leurs parties de cadre qui s'emboîtent formant également un guide rectiligne assurant au moins une étanchéité partielle

15. Refroidisseur à grilles poussantes selon la revendication 1, caractérisé en ce que chaque dispositif de compensation (12) est formé d'un module indépendant et incorporé - de préférence par des assemblages à brides (37, 38) - à la transition de l'extrémité supérieure (11a), située dans l'enveloppe, du canal correspondant fixe d'arrivée de gaz de refroidissement (11) à la tubulure (10) de raccord à l'arrivée de gaz de refroidissement qui est mobile alternativement.

16. Refroidisseur à grilles poussantes selon la revendication 1, caractérisé en ce que le châssis oscillant comprend des supports creux (8) sur lesquels les supports transversaux (6) des plaques mobiles de grille (3) sont fixés et avec lesquels ces supports creux de plaque de grille communiquent, les tubulures de raccord à l'arrivée de gaz de refroidissement (10) qui accompagnent les mouvements étant raccordées à ces supports creux (8).

17. Refroidisseur à grilles poussantes selon la revendication 1, caractérisé en ce que les tubulures (10) de raccord à l'arrivée de gaz de refroidissement qui accompagnent les mouvements du châssis oscillant sont fixées directement aux supports creux de plaque de grille, de préférence à leur côté inférieur.
